Europäisches Patentamt

**European Patent Office**

**Office européen des brevets**

(19)

(11) Veröffentlichungsnummer : **0 135 771**
**B1**

(12) **EUROPÄISCHE PATENTSCHRIFT**

(45) Veröffentlichungstag der Patentschrift :
**01.02.89**

(21) Anmeldenummer : **84109655.5**

(22) Anmeldetag : **14.08.84**

(51) Int. Cl.⁴ : **A 47 C 27/14, B 68 G 7/00,
B 29 C 67/22// B29L31/58**

(54) **Polster mit luftdurchlässigem Bezug und Schaumstoffkern.**

(30) Priorität : **26.08.83 DE 3330760**

(43) Veröffentlichungstag der Anmeldung :
**03.04.85 Patentblatt 85/14**

(45) Bekanntmachung des Hinweises auf die Patenterteilung : **01.02.89 Patentblatt 89/05**

(84) Benannte Vertragsstaaten :
**BE DE FR GB IT SE**

(56) Entgegenhaltungen :
**FR—A— 2 165 776
FR—A— 2 233 168
FR—A— 2 262 588
GB—A— 1 304 939
GB—A— 2 006 667**

(73) Patentinhaber : **BAYER AG
Konzernverwaltung RP Patentabteilung
D-5090 Leverkusen 1 Bayerwerk (DE)**

(72) Erfinder : **Volland, Robert, Dr.
Oskar-Schlemmer-Strasse 12
D-5090 Leverkusen (DE)**
Erfinder : **Freitag, Hans-Albrecht, Dr.
Mühlheimer Strasse 135
D-5060 Bergisch Gladbach 2 (DE)**
Erfinder : **Seesing, Johannes, Dipl.-Ing.
Geschwister-Scholl-Strasse 14
D-5090 Leverkusen (DE)**
Erfinder : **Bergmann, Herbert
An dem Büchel 13
D-5067 Kürten-Broich (DE)**

## Beschreibung

Die Erfindung betrifft ein Verfahren zur integralen Herstellung eines Polsters mit verbessertem Sitzklima durch Hinterschäumen eines gegebenenfalls mehrschichtigen Bezugsmaterials in einer teilbaren Form, deren Trennebene in der Nähe des Sitzspiegels verläuft, wobei ein schaumdicht versiegelter Bezugsstoff an die Innenkontur der Form gelegt wird und dabei der den Sitzspiegel bildende Teil des Bezugsstoffes in der Trennebene der Form vorzugsweise gedehnt eingespannt wird, und durch entsprechend reichliche Dosierung der gesamte Formhohlraum ausgefüllt wird und nach dem Ausreagieren des Schaumstoffkerns die Versiegelung, die aus einem luftundurchlässigen Material besteht, luftdurchlässig gemacht wird.

Bei Polstersitzen wird vielfach der Schaumstoffkern und der Sitzbezug (die Sitzhaube) in getrennten Arbeitsgängen hergestellt und die Haube an der Rückseite des Polsters oder dem Kissenträger befestigt. Das Nähen des Sitzbezuges und das Beziehen des Schäumlings sind kosten- und arbeitsintensiv.

In DE-B-22 27 143 ist ein direkt hinterschäumtes Sitzpolster beschrieben, das aus einem textilen Bezug mit einer Versiegelungsschicht und einem in situ-Schaumstoffkern besteht. Die Versiegelungsschicht ist schaum- und luftundurchlässig. Aus FR-A-22 04 116 ist es bekannt, einen Sitzflächenbezug aus Gewebe in einem Vakuumformwerkzeug zu hinterschäumen. Dabei besteht die Gefahr, daß der sich bildende Schaumstoff durch das Gewebe dringt und den Sitzflächenbezug oberseitig verschmutzt.

Zur Herstellung eines solchen direkt hinterschäumten Sitzpolsters wird ein rückseitig mit einer dehnbaren Folie versiegelter Bezug in eine Vakuumschäumform eingelegt, angesaugt (tiefgezogen) und der Hohlraum ausgeschäumt. Das Tiefziehen ist zur Fixierung des Bezuges und zur exakten Ausbildung der Polsterkontur erforderlich.

In GB-A-20 06 667 ist ein Verfahren beschrieben, gemäß welchem ein Textilbezug mit einer durchlässigen Schaumstoffolie hinterlegt und mit ihr durch Heißverpressen verbunden wird. Dieses Laminat wird anschließend in einem Formwerkzeug hinterschäumt. Dabei dringt aber schaumfähiges Reaktionsgemisch in die Schaumstoffolie ein und bildet eine verhärtete undurchlässige Schicht.

Nachteilig ist bei diesen Polstern die durch die luftundurchlässige Folie bzw. verhärtete undurchlässige Schicht verhinderte Wärme- und Feuchtigkeitsableitung. Es kommt dadurch beim Sitzen schnell zu einem Ansteigen der Temperatur bis in die Nähe der Körpertemperatur, was als unbehaglich empfunden wird.

Aus US-A-3 258 511 ist es bekannt, die Rückseite des Bezuges mit einem für das Reaktionsgemisch undurchlässigen Film zu überziehen und diesen Film nach dem Verfestigen des Schaumstoffes zu perforieren oder anderweitig fluiddurchlässig zu machen. Beim Durchbohren wird also häufig das Gewebe des textilen Bezugsstoffes verletzt, woraus später durch den Gebrauch Schäden entstehen können. Auch die Einstiche in den Schaumstoff können Ausgangsstellen für Risse bilden.

Es besteht die Aufgabe, ein Verfahren zur Herstellung eines Polsters zu schaffen, wobei einerseits das Durchdringen von Schaum durch den Bezugsstoff verhindert, aber andererseits ein verbessertes Sitzklima geschaffen wird.

Diese Aufgabe wird dadurch gelöst, daß die Versiegelung durch Lösungsmittel mindestens teilweise so weit zerstört wird, daß sie luftdurchlässig wird.

Dadurch wird erreicht, daß durch die Versiegelung einerseits das Durchdringen von Schaumstoff durch den Bezugsstoff bzw. verhärtete undurchlässige Schichten vermieden werden und andererseits durch das nachträgliche Durchlässigmachen der Versiegelung durch Lösungsmittel eine schonende Behandlung des Schaumstoffes und insbesondere des Bezugsstoffes gewährleistet ist.

Da mit Luftdurchlässigkeit auch eine Wasserdampfdurchlässigkeit verbunden ist, kann über den Luftaustausch durch den Bezug eine Wärme- und Feuchtigkeitsableitung bewirkt werden. Gegenüber dem Stand der Technik hat ein solches Polster, beispielsweise als Autositz, wesentlich bessere Gebrauchseigenschaften. Grundsätzlich können zur Erzeugung des Schaumstoffkerns bekannte Kaltschaumrezepturen eingesetzt werden. Kaltformschaumstoff ist in der Regel geschlossenzellig. Er wird durch das Kneten, Walken usw. offenzelliger gemacht.

Vorzugsweise wird zunächst der Schaumstoffkern im Bereich des Sitzspiegels an den Bezug angeschäumt und der während des Schäumens überstehende Bezugsstoff am ausreagierten Schaumstoffkern um dessen Seiten umgeschlagen und an der Rückseite durch Kleben, Nähen oder Schweißen befestigt.

Zur Verbessung der Verbindung des Bezugs mit dem Schaumstoffkern dienen vorzugsweise Laschen, die an der Rückseite des Bezugs (z. B. durch Klammern, Nähen, Kleben oder Schweißen) befestigt sind und von ihm abstehen. Beim Ausschäumen werden die Laschen mit dem Schaumstoffkern verbunden und bewirken, daß der Bezug nicht verrutschen kann, weil er im Schaumstoff verankert ist. Insbesondere wird dadurch in konkav gekrümmten Polsterbereichen gewährleistet, daß der Bezug der konkaven Form folgt. Es kann dadurch auf in Rillen des Kernes eingeschäumte Drahteinleger verzichtet werden, die bei bekannten Polstern mit Drahtstiften, die in am Bezug befindlichen Laschen stecken, verklammert werden.

Der Bezug der Polster ist in den meisten Fällen mehrschichtig. Er muß schaumundurchlässig sein, d. h. beim Hinterschäumen muß der dehnbare, vorzugsweise textile Bezug durch den expandierenden Schaum an die Formwand gepreßt werden, der Schaumstoff darf aber an keiner Stelle von außen her erkennbar sein. Vielmehr darf das Reaktionsgemisch an der Innenseite des Bezuges nur möglichst wenig eindringen, so daß der Schaumstoff im Randbereich des Schaumstoffkernes möglichst wenig verdichtet oder verhärtet ist.

Zur Realisierung der Luftdurchlässigkeit des Bezuges am fertigen Polster gibt es mehrere Möglichkeiten. Die Versiegelungsschicht kann während der Herstellung selbst luftundurchlässig sein, muß nachträglich aber leicht zerstörbar sein.

Vorzugsweise wird als Versiegelung Papier oder ein papierähnliches Produkt, welches bevorzugt oberflächenvergütet ist, verwendet.

Geeignet sind insbesondere dünne leichte Papiere (z. B. von 20 bis 40 g/m²), die aus langfaserigem Material bestehen. Dehnbares Papier (in mehreren Richtungen gewelltes Kreppapier) ist besonders vorteilhaft, weil es sich den Konturen der Form leichter anpaßt. Vorzugsweise werden oberflächlich vergütete Papiere verwendet, sogenannte Trennpapiere. Die Oberflächenvergütung besteht beispielsweise aus einer Silikonbeschichtung oder Polyethylenbeschichtung. Der Schaumstoffkern bildet zum Trennpapier hin eine normale Haut aus.

Gemäß einer besonderen Ausgestaltung des Verfahrens wird als Versiegelung eine am ausreagierten Schaumstoffkern durch Lösungsmittel angelöste Folie, vorzugsweise eine Polyvinylalkohol-Folie, verwendet.

Eine solche kann durch Wasser oder niedergeschlagenen Wasserdampf am fertigen Polster aufgelöst werden. Vorzugsweise wird bei einem vorgefertigten Polsterbezug (Sitzhaube) der den Sitzspiegel bildende Teil der Haube in der Trennebene der Form eingespannt und die Seitenteile während des Schäumens außerhalb der Form belassen und die Ränder der Seitenteile werden an der Rückseite eines Polsterträgers oder des ausreagierten Schaumstoffkerns befestigt.

Alternativ kann auch eine vorgefertigte Sitzhaube hinterschäumt werden. Wird die Sitzhaube genäht, kann es erforderlich sein, im Bereich der Nähte Streifen einer elastischen Folie mit einzunähen, die den Faden schaumdicht umschließen. Als besonders geeignet hat sich eine hochelastische Polyurethanfolie von 0,5 mm Stärke erwiesen.

Damit sich der Bezug straff und faltenfrei über die Seiten des Schaumstoffkernes spannt, kann für diesen Bereich mit Vorteil eine Schrumpffolie eingesetzt werden. Diese strafft sich nach dem Hinterschäumen durch Anwärmen.

Die Positionierung des Bezugsstoffes in der Form beim in situ-Hinterschäumen erfolgte bisher durch Ansaugen eines luftundurchlässigen Bezugsmaterials durch Vakuum, es kam dabei leicht zu einem faltigen Bezug und mangelhaft ausgebildeten Konturen, insbesondere war es schwierig, einen gemusterten Bezugsstoff exakt auszurichten. Nach dem erfindungsgemäßen Verfahren läßt sich der Bezug präzise und genau positioniert in der Form halten. Eine Vorspannung des Bezugsstoffes wird durch Dorne, Klettbänder, Klemmrahmen und dergleichen erzeugt. Der Bezug ist faltenfrei. Die teilbare Form wird durch den Bezugsstoff in der Trennebene abgedichtet.

Eine besonders vorteilhafte Abwandlung des neuen Verfahrens besteht darin, daß die gegen die Schäumung wirksame Versiegelung des Bezugsstoffes durch Mittel erreicht wird, die im Bereich des Bezugsstoffes beim Ausschäumen zu einem beschleunigten Viskositätsaufbau und-/oder einer erhöhten Schaumstabilität und/ oder einer erhöhten Schaumabweisung führen und die entweder als vorgefertigte Imprägnierung des Bezuges angewendet werden oder vor dem Ausschäumen auf die Innenseite des Bezugsstoffes aufgetragen werden.

Vorzugsweise werden als Mittel teritäre Amine, wie Bis-dimethylamino-ethylether ; Zinnkatalysatoren, wie Dibutyl-zinndilaurat, starke Silikonstabilisatoren oder auch fett- und schmutzabweisende Imprägnierungen, wie Perfluoralkane, eingesetzt.

Das Eindringen und Kollabieren des Schaumstoffes kann durch starke Stabilisatoren vermindert werden, die heute im allgemeinen im Kaltschaum wegen zu hoher Wirksamkeit keine Verwendung finden, sondern bei der Herstellung von Heißschaum oder z. B. geschlossenzelligem Hartschaumstoff eingesetzt werden.

Die Luftdurchlässigkeit und Schaumundurchlässigkeit an einer von vornherein luftdurchlässigen Versiegelungsschicht kann dadurch wesentlich unterstützt werden, daß man dafür sorgt, daß der Schaum, wenn er an den Bezug kommt, sowenig fließfähig ist, daß er ihn nicht mehr durchdringt. Das kann durch einen Schaum erreicht werden, der frühzeitig bei Einbringen des Rohstoffgemisches aufschäumt und rasch in der Viskosität ansteigt (durch verstärkte Katalyse mit z. B. tertiären Aminen, erhöhte Rohstofftemperaturen oder Rezepturzusätze wie Pyrokohlensäure (Frothing-Verfahren)). In die gleiche Richtung zielen Maßnahmen, um die Schaumstabilität zu erhöhen, indem z. B. starke Silikonstabilisatoren verwendet werden. Diese Maßnahmen können einzeln oder kombiniert herangezogen werden. Sie bewirken, daß ein von vornherein luftdurchlässiger Bezugsstoff durch das Hinterschäumen nicht durchdrungen wird, der Schaumstoff sich nicht übermäßig verdichtet oder gar zu einem kompakten Polymeren kollabiert. Die Imprägnierung selbst kann am für die Hinterschäumung vorbereiteten Bezugsstoff oder an Bahnware durch Aufsprühen, Aufstreichen, Aufrakeln oder ähnliche Verfahren erfolgen. Die eigentlichen Wirksubstanzen können durch Lösungsmittel, Verdickungsmittel und andere Hilfsmittel in für das Imprägnierverfahren geeigneter Weise eingestellt werden.

In den Fällen, in denen der Schaumstoff nicht fest und dauerhaft an der Rückseite des Bezuges haftet, muß insbesondere bei einem Polster mit konkaven Bereichen der Bezug zusätzlich im Schaumstoffkern verankert werden, wozu Laschen besonders geeignet sind.

Die Seitenteile der Sitzhaube oder von dem Sitzspiegel herabhängende Seitenteile werden an der Rückseite des Polsters oder am Polsterträger durch an sich bekannte Verfahren wie z. B. Klammern befestigt.

In der Regel ist der Bezug mehrschichtig. Die äußerste, sichtbare Schicht wird meist von einem vorzugsweise textilen, dehnbaren Bezugsstoff gebildet. Diese Schicht muß bezüglich ihres Musters exakt an die Sitzform angepaßt sein und darf nicht vom Schaum verschmutzt sein. An dieser Schicht ist häufig ein Faservlies oder eine Schaumstofffolie ankaschiert. Das Faservlies trägt zum besseren Feuchteabtransport bei. Besonders geeignet sind saugfähige Acrylfasern mit einem porösen Kern (z. B. Dunova ®). Schaumdichte Folien können durch Kleben, Flammkaschieren, Verschweißen usw. am Bezug befestigt werden oder durch Aufrakeln eines Coatings gebildet werden. Grundsätzlich ist es möglich, hochfrequenzverschweißbares Material einzusetzen (z. B. PVC, Polyester, Polyetherschaum, imprägniertes Vlies).

Es ist beim Kaltschaumprozeß Stand der Technik, durch Überdosieren (Overpacking) den Schaumstoff unter Druck (ca. 1 bar) herzustellen. Dieser Druck reicht aus, den eingelegten Bezug im Bereich des Sitzspiegels der Formenkontur faltenfrei anzupassen.

Ein nach dem neuen Verfahren hergestelltes Sitzpolster für Kraftfahrzeuge ist in der Zeichnung dargestellt und im folgenden weiter beschrieben. Es zeigen :

Fig. 1 einen Schnitt durch ein Polster ;

Fig. 2 eine eingenähte Lasche mit Folie im Sitzspiegel ;

Fig. 3 einen Schnitt durch eine Form mit eingelegtem Bezugsstoff ;

Fig. 4 einen Schnitt durch eine Form mit eingelegter Sitzhaube.

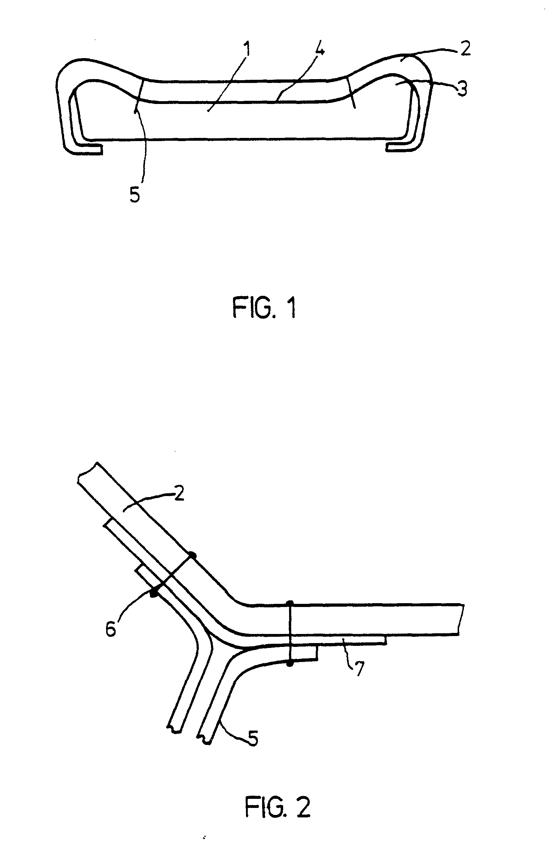

In Fig. 1 ist ein Schaumstoffkern 1 oben und an den Seiten mit einem mehrschichtigen Bezug 2 umgeben, der an der Unterseite des Schaumstoffkerns 1 befestigt ist. Typisch sind die beiden Wülste 3, die die Seiten des Sitzspiegels 4 bilden. Damit der Bezug 2 auch bei einer konkaven Krümmung eng am Kernstoff 1 anliegt, sind im Bereich des Sitzspiegels 4 mehrere Laschen 5 vorhanden, die am Bezug 2 angenäht sind und sich beim Ausschäumen fest mit dem Schaumstoffkern 1 verbinden.

Die Befestigung einer Lasche 5 am Bezug 2 ist in Fig. 2 deutlicher zu erkennen. Um zu verhindern, daß der Bezugsstoff 2 mit Interliner durch die Nähte 6 seine Schaumundurchlässigkeit verliert, ist dieser Bereich durch eine Polyurethanfolie 7, die mit angenäht ist, geschützt. Der beim Nähen durch die Folie 7 gezogene Faden 6 wird, nachdem die Nadel herausgezogen ist, von der elastischen Folie 7 fest umschlossen, wodurch die Nadelstichlöcher abgedichtet werden.

Der Bezug 2 ist hier mehrschichtig, die äußerste Schicht ist ein Polyamidtextil, es bestimmt das Aussehen des Polstersitzes. Darunter ist eine ebenfalls luftdurchlässige Polyurethanschaumstofffolie kaschiert, die mit einem Papier verbunden ist. Dieses Papier wirkt während des Ausschäumens als schaumundurchlässige Barriere. Durch Nadeln und Walken des fertigen Polsters wird das Papier soweit zerstört, daß die Luftdurchlässigkeit gegeben ist.

In einem Fall, wo man durch besonders schnelles Aushärten des Schaums am Bezug auf eine separate schaumundurchlässige Folie verzichtet, besteht der Bezug 2 beispielsweise wieder aus einen Polyamidtextil als oberste Schicht, unter der ein Faservlies liegen kann, während die unterste Schicht beispielsweise ein Polyamidgestrick ist. Bevor die Form geschlossen wird, wird die Rückseite des Bezuges 2 mit einem Wirkstoff, z. B. Bis-dimethylaminoethylether, besprüht, der zu einem beschleunigten Viskositätsaufbau und/ oder einer erhöhten Schaumstabilität führt, so daß der Schaum den Bezugsstoff nicht durchdringt, sich nicht übermäßig verdichtet oder gar zu einem kompakten Polymeren kollabiert. Der aufsteigende Schaum drückt zwar den Bezug an die Formwand, der Schaum gelangt aber nicht in die äußere textile Schicht des Bezuges.

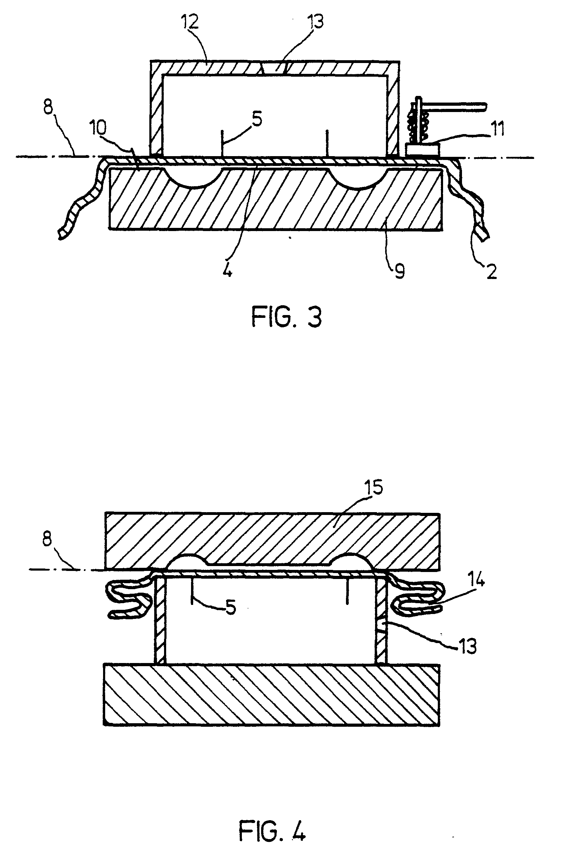

Eine Form, mit der die Sitzoberseite (der Sitzspiegel) beim Aufschäumen mit dem Bezugsstoff verbunden wird, indem das Reaktionsgemisch auf den unten in der Form befindlichen Bezug durch ein Fülloch 13 des Formendeckels 12 gegeben wird, ist im Schnitt in Fig. 3 dargestellt. Es ist wesentlich, die Trennebene 8 der Form so zu legen, daß sie durch die Kante, die durch Sitzspiegel 4 und Seiten des Sitzes gebildet wird, verläuft. Der Verbund Schaumstoffkern/Bezug erfolgt dadurch im Bereich des Sitzspiegels 4 des Polsters. Durch das Einklemmen in der Trennebene 8 der Form kann dieser genau ausgerichtet werden. Der Formboden 9 begrenzt den Sitzspiegel 4. Der dehnbare Bezug 2 wird straff über den Formboden 9 gespannt (Dorn 10 und Klemmvorrichtung 11). Eingezeichnet sind auch noch die in den Schaumstoffkern 1 reichenden Laschen 5 am Bezug 2. Im Formoberteil 12 ist für das Reaktionsgemisch ein Fülloch 13 angeordnet. Im Beispiel von Fig. 3 wird ein nicht vorgeformter Bezug 2 eingesetzt. Es könnte aber auch eine vorgefertigte Sitzhaube eingesetzt werden.

Eine Form, mit der eine Sitzhaube 14 hinterschäumt werden kann, indem das Reaktionsgemisch durch ein seitliches Fülloch 13 unter dem Bezugsstoff 14 in die Formenhöhlung gegeben wird und der aufsteigende Schaum erst in fortgeschrittenem Reaktionsstadium gegen den oben am Formenoberteil 15 befindlichen Bezug gedrückt wird, ist in Fig. 4 dargestellt. Hier ist im Formoberteil 15 die Kontur des Sitzspiegels, so daß die Trennebene 8 an der Form oben ist. Daß in einem Fall der Schaum von unten, im anderen Fall von oben eingefüllt wird, soll nur auf verschiedene Möglichkeiten hinweisen. In beiden Fällen kann entweder eine vorgefertigte Sitzhaube oder ein nicht vorgeformter Bezug verwendet werden.

Der Sitz wird nach der Entnahme aus der Form genadelt und gewalkt. Es werden dabei die geschlossenen Zellen des Kerns aufgebrochen. Er ist nunmehr ausreichend luftdurchlässig.

## Patentansprüche

1. Verfahren zur integralen Herstellung eines Polsters mit verbessertem Sitzklima durch Hinterschäumen eines gegebenenfalls mehrschichtigen Bezugsmaterials (2) in einer teilbaren Form (9, 12, 15), deren Trennebene (8) in der Nähe des Sitzspiegels (4) verläuft, wobei ein schaumdicht versiegelter Bezugsstoff (2, 14) an die Innenkontur der Form gelegt wird und dabei der den Sitzspiegel (4) bildende Teil des Bezugsstoffes (2, 14) in der Trennebene (8) der Form (9, 12, 15) vorzugsweise gedehnt eingespannt wird, und durch entsprechend reichliche Dosierung der gesamte Formhohlraum ausgefüllt wird und nach dem Ausreagieren des Schaumstoffkerns (1) die Versiegelung, die aus einem luftundurchlässigen Material besteht, luftdurchlässig gemacht wird, dadurch gekennzeichnet, daß die Versiegelung durch Lösungsmittel mindestens teilweise so weit zerstört wird, daß sie luftdurchlässig wird.

2. Verfahren nach Anspruch 1, dadurch gekennzeichnet, daß als Versiegelung Papier oder ein papierähnliches Produkt, welches bevorzugt oberflächenvergütet ist, verwendet wird.

3. Verfahren nach Anspruch 1, dadurch gekennzeichnet, daß als Versiegelung eine am ausreagierten Schaumstoffkern (1) durch Lösungsmittel angelöste Folie, vorzugsweise eine Polyvinylalkohol-Folie, verwendet wird.

4. Verfahren nach einem der Ansprüche 1, 2 oder 3, dadurch gekennzeichnet, daß zunächst der Schaumstoffkern (1) im Bereich des Sitzspiegels (4) an den Bezug (2, 14) angeschäumt wird und der während des Schäumens überstehende Bezugsstoff (2, 14) am ausreagierten Schaumstoffkern (1) um dessen Seiten umgeschlagen und an der Rückseite durch Kleben, Nähen oder Schweißen befestigt wird.

5. Verfahren nach einem der Ansprüche 1, 2 oder 3, dadurch gekennzeichnet, daß bei einem vorgefertigten Polsterbezug (Sitzhaube) (14) der den Sitzspiegel (4) bildende Teil der Haube (14) in der Trennebene (8) der Form eingespannt wird und die Seitenteile während des Schäumens außerhalb der Form verbleiben und die Ränder der Seitenteile an der Rückseite eines Polsterträgers oder des ausreagierten Schaumstoffkerns (1) befestigt werden.

6. Verfahren nach einem der Ansprüche 1 bis 5, dadurch abgewandelt, daß die gegen die Schäumung wirksame Versiegelung des Bezugsstoffes (2, 14) durch Mittel erreicht wird, die im Bereich des Bezugsstoffes (2, 14) beim Ausschäumen zu einem beschleunigten Viskositätsaufbau und/oder einer erhöhten Schaumstabilität und/oder einer erhöhten Schaumabweisung führen und die entweder als vorgefertigte Imprägnierung des Bezuges (2, 14) angewendet werden oder vor dem Ausschäumen auf die Innenseite des Bezugsstoffes (2, 14) aufgetragen werden.

7. Verfahren nach Anspruch 6, dadurch gekennzeichnet, daß als Mittel teritäre Amine, wie Bis-dimethyl-aminoethylether ; Zinnkatalysatoren, wie Dibutyl-zinndilaurat ; starke Silikonstabilisatoren oder auch fett- und schmutzabweisende Imprägnierungen, wie Perfluoralkane, eingesetzt werden.

## Claims

1. Process for the integral production of an upholstery seat with improved seating climate by backfoaming an optionally multilayered covering material (2) in a divisible mould (9, 12, 15) whose plane of separation (8) is situated close to the seating surface (4), in which an upholstery covering material (2, 14) which is sealed to be impervious to the foam is placed against the inner contour of the mould and the part of the covering material (2, 14) which forms the seating surface (4) is clamped into position, preferably with stretching, in the plane of separation (8) of the mould (9, 12, 15), and the entire cavity of the mould is filled up with sufficiently copious introduction of material and, after the foam core (1) has reacted, the seal, which consists of an air impermeable material, is rendered air permeable, characterised in that the seal is at least partly destroyed by solvent so that it becomes air permeable.

2. Process according to claim 1, characterised in that the material used as seal is paper or a paperlike product which is preferably surface finished.

3. Process according to claim 1, characterised in that a sheet which has been partly dissolved so as to adhere to the foam core (1) when the latter has completed its reaction, preferably a sheet of polyvinyl alcohol, is used as seal.

4. Process according to one of the claims 1, 2 or 3, characterised in that the foam core (1) is first partly foamed to the cover (2, 14) in the region of the central seating surface (4) and the piece of covering material (2, 14) which overhangs the reacted foam core (1) during the foaming process is folded over the sides of said foam core and is fixed to the back by glueing, stitching or welding.

5. Process according to one of the claims 1, 2 or 3, characterised in that in a prefabricated upholstery covering (seat hood) (14), the part of the hood (14) which forms the main seating area (4) is clamped into position in the plane of separation (8) of the mould and the side parts remain outside the mould during the foaming process and the edges of the side parts are fixed to the back of a seat upholstery support or of the reacted foam core (1).

6. Process according to one of the claims 1 to 5, modified in that the sealing of the upholstery cover material (2, 14) to render it imprevious to the expanding foam is achieved by means which give rise to accelerated build up of viscosity and/or increased foam stability and/or increased foam repellence in the region of the material (2, 14) during the foaming process and which are either used as prefinished impregnation of the cover (2, 14) or are applied to the internal surface of the cover (2, 14) before foaming takes place.

7. Process according to claim 6, characterised in that the means used are tertiary amines such as bis-dimethylaminoethyl ether ; tin catalysts such as dibutyl tin dilaurate ; powerful silicone stabilisers or fat repellent and dirt repellent impregnating materials such as perfluoroalkanes.

**Revendications**

1. Procédé pour la fabrication intégrale d'un coussin offrant un meilleur climat d'assise par expansion de mousse plastique derrière un matériau de revêtement (2) éventuellement à plusieurs couches dans un moule scindable (9, 12, 15) dont le plan de séparation (8) s'étend à proximité de la surface du siège (4), et dans lequel un matériau de revêtement colmaté de façon étanche à la mousse (2, 14) est posé sur le contour intérieur du moule et la partie du matériau de revêtement (2, 14) formant la surface du siège (4) est de préférence tendue dilatée dans le plan de séparation (8) du moule (9, 12, 15), l'ensemble du creux du moule étant rempli par un dosage abondant correspondant et le colmatage, qui consiste en un matériau imperméable à l'air, étant rendu perméable à l'air après réaction complète du noyau de mousse (1), caractérisé en ce que le colmatage est, au moins en partie, détruit par des solvants de manière à ce qu'il devienne perméable à l'air.

2. Procédé selon la revendication 1, caractérisé en ce que l'on emploie comme colmatage du papier ou un produit semblable au papier, dont la surface a de préférence été rendue antiréfléchissante.

3. Procédé selon la revendication 1, caractérisé en ce que l'on utilise comme colmatage une feuille, de préférence une feuille d'alcool de polyvinyle, attaquée par des solvants sur le noyau de mousse (1) qui a fini de réagir.

4. Procédé selon l'une des revendications 1, 2 ou 3, caractérisé en ce que le noyau de mousse (1) est d'abord expansé dans la zone de la surface du siège (4) sur le revêtement (2, 14) et que le matériau de revêtement (2, 14) qui dépasse durant l'expansion au noyau de mousse (1) qui a fini de réagir est replié autour des côtés de celui-ci et fixé au dos par collage, couture ou soudage.

5. Procédé selon l'une des revendications 1, 2 ou 3, caractérisé en ce que, dans le cas d'un revêtement préfabriqué de coussin (housse de siège) (14), la partie de la housse (14) formant la surface du siège (4) est tendue dans le plan de séparation (8) du moule et que les parties latérales restent en dehors du moule durant l'expansion et que les bords des parties latérales sont fixés au dos d'un support de coussin ou au noyau de mousse (1) qui a fini de réagir.

6. Procédé selon l'une des revendications 1 à 5, modifié en ce qu'un colmatage du matériau de revêtement (2, 14) efficace contre la mousse est obtenu par des produits qui, durant l'expansion, provoquent dans la zone du matériau de revêtement (2, 14) une augmentation accélérée de viscosité et/ou une plus grande stabilité de la mousse et/ou un plus grand refus de mousse et qui sont soit utilisés comme imprégnation préalable du revêtement (2, 14), soit appliqués sur l'intérieur du matériau de revêtement (2, 14) avant l'expansion.

7. Procédé selon la revendication 6, caractérisé en ce que l'on emploie comme produits des amines tertiaires comme le bis-diméthylaminoéthyléther ; des catalyseurs à l'étain comme le dilaurate de dibutylétain ; des puissants stabilisateurs au silicone ou encore des imprégnations anti-graisse et antisalissantes comme les perfluoralcanes.

FIG. 1

FIG. 2

EP 0 135 771 B1

FIG. 3

FIG. 4

2